# EUROPEAN PATENT SPECIFICATION

(11) **EP 2 032 879 B1**
(45) Date of publication and mention of the grant of the patent: **06.03.2013**
(21) Application number: 07729999.8
(22) Date of filing: 08.06.2007
(51) Int. Cl.: F16H 61/662, F16H 57/04

(54) **HYDRAULICALLY ACTUATED CONTINUOUSLY VARIABLE TRANSMISSION FOR A VEHICULAR DRIVE LINE PROVIDED WITH AN INTERNAL COMBUSTION ENGINE**
HYDRAULISCH BETÄTIGTES STUFENLOSES GETRIEBE FÜR EINEN MIT EINEM VERBRENNUNGSMOTOR VERSEHENEN FAHRZEUGANTRIEBSSTRANG
TRANSMISSION A VARIATION CONTINUE A ACTIONNEMENT HYDRAULIQUE POUR CHAÎNE CINEMATIQUE DE VEHICULE POURVU DE MOTEUR A COMBUSTION INTERNE

(30) Priority: 09.06.2006 EP 06011982
(43) Date of publication of application: 11.03.2009
(73) Proprietor: Robert Bosch GmbH, 70442 Stuttgart (DE)
(72) Inventor: VAN DER SLUIS, Francis Maria Antonius, 5271 HP Sint-michielsgestel (NL)
(74) Representative: Plevier, Gabriel Anton Johan Maria
(86) International application number: PCT/EP2007/055640
(87) International publication number: WO 2007/141323

(56) References cited:
- EP-A1- 1 348 894
- WO-A-2006/016797
- DE-A1- 10 327 406
- US-A1- 2002 069 847

## Description

The present invention relates to a continuously variable transmission as defined in the preamble of the following claim 1.

Such a continuously variable transmission is generally known, and e.g. described in the international patent publication WO-A-2006/016797 in the name of Applicant. The known continuously variable transmission, which may be one of several known types, provides a transmission ratio that may be controlled to an arbitrary value within a range of transmission ratios covered by said transmission by an appropriate actuation thereof. In addition to such ratio control, the said actuation of the transmission further includes the control of a torque transmittable by the transmission. Typically, the transmission actuation requires a relatively large flow of hydraulic fluid at a relatively high pressure level. Although such a high pressure level per se may be realised and controlled without extraordinary difficulty in the known transmission, it is particularly the large flow of fluid at such high pressure level that is required for dynamic operation of the transmission, i.e. for changing its transmission ratio, that poses a significant strain to the lay-out and/or components of the hydraulic system of the transmission. Such strain is all the more felt where a hydraulic pump of the transmission is driven mechanically, i.e. directly by an internal combustion engine of a vehicular drive line in which the transmission is applied.

In the above-mentioned International publication it is therefore proposed to alleviate such strain by providing the transmission not only with a mechanically driven pump, but also with an electrically driven pump, e.g. driven by an electric motor that is supplied with power by the battery or generator/alternator of the vehicle in which the transmission is applied, which latter pump is incorporated in series with the mechanically driven pump, i.e. is supplied with fluid via the mechanically driven pump. In this known arrangement the so-called auxiliary hydraulic functions of the transmission, such as clutch pressurisation and component lubrication, are supplied with fluid directly by the mechanically driven pump, whereas its main hydraulic function, i.e. the said transmission actuation, is supplied with fluid via the electrically driven pump.

This known arrangement was found to provide a comparatively energy efficient and silent electro-hydraulic control system for a continuously variable transmission. However, when applied in a vehicular drive line the known transmission comes with the limitation that for its hydraulic actuation both the mechanically driven pump and the electrically driven pump have to be operated simultaneously. This feature thus prevents the engine from being controlled in a so-called start/stop operational mode, i.e. from being automatically stopped, i.e. even during continued use of the drive line, for example when the vehicle is at rest but not parked as such (e.g. when waiting at a red traffic light) or when the vehicle is temporarily driven electrically (e.g. when driving at low speed in a vehicle equipped with a so-called hybrid drive line including both a internal combustion engine and an electric motor).

In the German patent application DE-A-41 34 268 there is described a continuously variable transmission with an electro-hydraulic control system that is capable of transmission actuation when the engine is stopped. However, this latter system does not possess the advantages of the above-described arrangement in terms of energy efficiency and noise generation. For example, when the mechanically driven pump is stopped a considerable leakage may occur via this pump from the outlet or (pressurised) discharge side of the electrically driven pump to a reservoir of hydraulic fluid.

The present invention aims to improve on the above-described electro-hydraulic control systems, in particular for allowing the system to be operated independently from the internal combustion engine, at least when the latter is stopped, while providing an energy efficient and silent operation.

According to the invention this aim is realised by the continuously variable transmission of claim 1. The hydraulic control system of this transmission has been arranged such that it can be operated, i.e. at least the main hydraulic function of said transmission actuation can be effected thereby, even when the engine is stopped. The present invention thus allows the continuously variable transmission to be favourably applied in a (hybrid) drive line wherein the engine is stopped during continued operation of the drive line for conserving fuel.

According to the invention, the electrically driven pump can be continued to be operated by the mere addition of a check valve, which is also known as a one-way (directional) valve, connecting its inlet or suction side to the fluid reservoir. In this arrangement, when the mechanically driven pump is stopped and thus does not supply fluid to the electrically driven pump, this latter pump can draw fluid directly from the reservoir instead. Also, a further valve is positioned between the auxiliary hydraulic users and the inlet of the electrically driven pump, which prevents that, when the mechanically driven pump is stopped and by the continued operation of the electrically driven pump, the auxiliary pressure is reduced, which could otherwise disadvantageously affect the auxiliary hydraulic functions of the transmission.

In yet a further embodiment of the invention the hydraulic control system is provided with a switch valve that is positioned between the auxiliary pressure valve and the outlet of the electrically driven pump and that can be switched in dependence on the pressure level at the inlet of the electrically driven pump, which switch valve makes a hydraulic connection when the said pressure level is relatively low and breaks it when the said pressure level is relatively high. In this latter arrangement of the hydraulic control system it is advantageously realised that when the mechanically driven pump is stopped, the auxiliary hydraulic functions of the transmission can be continued to be controlled, as they are supplied with fluid by the electrically driven pump.

The invention will now be elucidated further along a drawing in which:
figure 1 is a schematic representation of a prior art and to be improved continuously variable transmission,
figure 2 represents the basic hydraulic configuration of the novel transmission according to the invention and
figures 3 represents a further hydraulic configuration of the novel transmission according to the invention.

In the figures, identical references relate to corresponding technical functions or structures, as the case may be. The thick lines indicate hydraulic lines, i.e. passages for hydraulic fluid, whereas the dashed lines indicate pressure control lines for the control, i.e. the biasing of the various hydraulic valves.

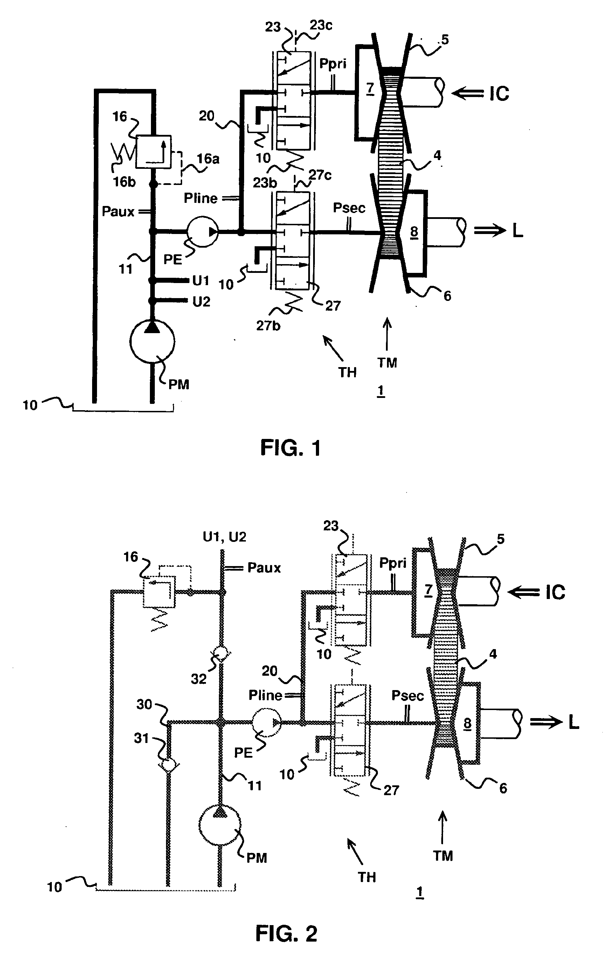

Figure 1 schematically shows a continuously variable transmission 1 comprising a mechanical system TM for realising and changing a physical transmission ratio between an input shaft 2 and an output shaft 3 of the transmission 1, and a hydraulic system TH for the operation and control of the transmission 1. The hydraulic system TH is arranged both for the actuation of the said mechanical system TM and for the control of all auxiliary hydraulic users U1, U2 of the transmission 1, such as clutch pressurisation and component lubrication. The transmission 1 may be incorporated between an internal combustion engine IC and a load L, for example in a motor vehicle drive line, for varying a speed and torque transmission ratio between the engine IC and the load L within a continuous range of possible transmission ratios.

In this particular illustrative example the mechanical system TM of the known transmission 1 comprises an endless flexible belt 4 that is wrapped around two pulleys 5 and 6, whereby each pulley is connected to either the input shaft 2 or the output or secondary shaft 3 of the transmission 1. The belt 4 is frictionally engaged with the pulley discs of a respective pulley 5, 6 by means of a clamping force that is generated by hydraulic pressure exerted in a pressure chamber 7 or 8 of a piston-and-cylinder assembly that is associated with that respective pulley 5, 6, i.e. either the so-called primary pressure chamber 7 associated with the pulley 5 connected to the input shaft 2 or the so-called secondary pressure chamber 8 associated with the pulley 6 connected to the input shaft 3.

The hydraulic system TH of the known transmission 1 comprises a mechanically driven main pump PM and an electrically driven auxiliary pump PE, which latter pump PE may be activated on demand and to a variable extent, in particular during dynamic operation of the mechanical system TM of the transmission 1. The mechanically driven pump PM on the other hand is driven directly and continuously by the engine IC, the flow of fluid supplied thereby thus being dependent on the rotational speed of the engine drive shaft.

The mechanically driven pump PM draws fluid in via its inlet or suction side from a reservoir 10 for hydraulic fluid. This fluid is supplied via the outlet or discharge side of the pump PM to a main line 11 of the hydraulic system TH. The electrically driven pump PE is provided in series with, i.e. downstream of the mechanically driven pump PM, such that it draws fluid from the main line 11 via its inlet and supplies it to a transmission actuation line 20 of the hydraulic system TH for controlling a primary pressure Ppri in the primary pressure chamber 7 and a secondary pressure Psec in the secondary pressure chamber 8 of the transmission 1. To this end, by way of example, the actuation line 20 connects to both a primary valve 23, which is located between the electrically driven pump PE and the primary pressure chamber 7 for controlling the primary pressure Ppri to a desired level, and a secondary valve 27, which is located between the electrically driven pump PE and the secondary pressure chamber 8 for controlling the secondary pressure Psec to a desired level. Both said valves 23 and 27 are operated under the influence of generally known valve biasing means that, in this example, comprise respective valve control pressure conduits 23c and 27c and respective mechanical springs 23b and 27b. Hereby, the actual valve control pressure in the respective conduit 23c and 27c is effect by means of a respective solenoid-operated additional valve (not shown). By means of the primary and secondary valves 23 and 27 the respective pressure level Ppri, Psec can be controlled between ambient pressure, i.e. the pressure level prevailing in the fluid reservoir 10, and a line pressure level Pline prevailing in the actuation line 20, which line pressure Pline is effected by an appropriate, controlled activation of the electrically driven pump PE.

Further, like the electrically driven pump PE, also the auxiliary hydraulic users U1, U2 of the transmission 1 are connected to, i.e. are supplied with fluid by the mechanically driven pump PM via the main line 11. The pressure level in the main line 11 is thereby maintained at a relatively low auxiliary pressure Paux by an auxiliary pressure-regulating valve 16, which pressure, in the present configuration of the hydraulic system TH, is set at a constant level determined by respective valve biasing means, comprising an auxiliary pressure Paux feedback line 16a and a mechanical spring 16b. In the present example of the hydraulic system TH, any surplus of the flow of fluid generated by the mechanically driven pump PM is returned by the auxiliary pressure-regulating valve 16 directly to the fluid reservoir 10.

Although this known transmission arrangement provides a comparatively energy efficient and silent electro-hydraulic control system for a continuously variable transmission, it comes with the limitation that the electrically driven pump PE is supplied with -pressurised- fluid by the mechanically driven pump PM. This feature prevents the engine IC that drives the latter pump PM from being stopped, at least without simultaneously stopping the electrically driven pump PE and thus also deactivating the transmission. The present invention overcomes such limitation by a favourably straight forward measure that leaves the particular advantages of the above arrangement essentially unaffected, which measure is illustrated in figure 2.

Figure 2 largely corresponds to figure 1, however, with the addition of a further hydraulic line 30, denoted supply line 30, which is provided between and connects the inlet of the electrically driven pump PE and the fluid reservoir 10 and which is interrupted by a one-way or check valve 31 that prevents fluid from flowing towards the reservoir 10. The supply line 30 and check valve 31 allow the electrically driven pump PE to draw fluid directly from the reservoir 10, bypassing the mechanically driven pump PM when the latter pump PM is stopped or, at least, when a flow of fluid discharged by the latter pump PM is completely sucked in by electrically driven pump PE.

Also in figure 2 configuration of the hydraulic system TH there is depicted a further check valve 32, which is positioned between the auxiliary hydraulic users U1, U2 and the main line 11 preventing a flow of fluid from the said users U1, U2 via the main line 11 towards the inlet of the electrically driven pump PE. This feature of the transmission 1 according to the invention prevents that, by the continued operation of the electrically driven pump PE when the mechanically driven pump PM is stopped, fluid is drawn from the auxiliary hydraulic users U1, U2, whereby the auxiliary pressure Paux would be unfavourably reduced.

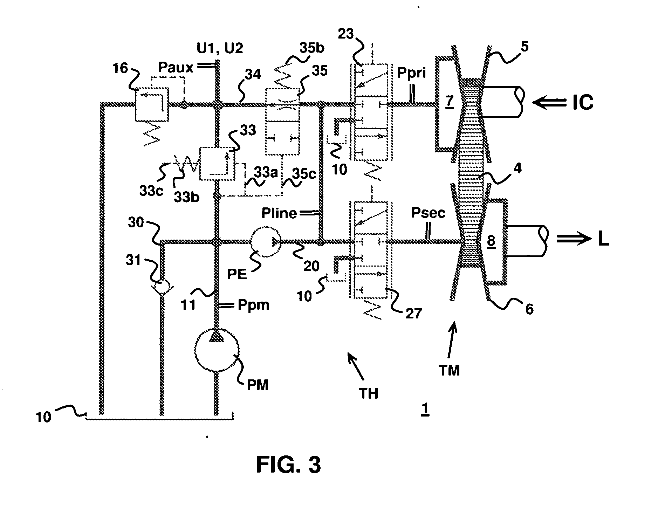

Alternatively, a further pressure control valve 33 may be used in stead of the said further check valve 32, in which case the hydraulic system TH is arranged such that the further pressure control valve 33 is located upstream from the auxiliary pressure valve 16, but downstream from the inlet of the electrically driven pump PE in relation to, i.e. as seen in the direction of, the flow of fluid (to be) generated by the mechanically driven pump PM. This latter configuration of the hydraulic system TH is schematically depicted in figure 3. It comes with the advantage that the discharge pressure of the mechanically driven pump PM may be set higher than the auxiliary pressure Paux for supporting the operation of the electrically driven pump PE, e.g. when the transmission ratio is changed at a high transmission torque load. To this end the further pressure control valve 33 is provided with valve biasing means comprising a valve control pressure conduit 33c, a mechanical pump pressure Ppm feedback line 33a and a mechanical spring 33b.

Also in figure 3 there is illustrated a further enhancement of the hydraulic system TH in accordance with the present invention, which includes the addition of yet a further hydraulic line 34, denoted connecting line 34, which is provided between and connects the outlet of the electrically driven pump PE and the auxiliary hydraulic users U1, U2 and which is interrupted by a switch valve 35. The switch valve is arranged and operated ("switched") by means of valve biasing means comprising a valve control pressure conduit 34c carrying the mechanical pump pressure Ppm and a mechanical spring 34b so as to make the above hydraulic connection between the outlet of the electrically driven pump PE and the auxiliary hydraulic users U1, U2 when the mechanical pump PM is stopped, i.e. when the mechanical pump pressure Ppm falls below the (desired) auxiliary pressure Paux, and to break the same when the such pressure level Ppm is relatively high. This latter configuration comes with the advantage that the auxiliary hydraulic functions of the transmission can be continued to be controlled even when the mechanically driven pump PM is stopped, as they are then supplied with fluid by the electrically driven pump PE.

## Claims

1. Continuously variable transmission (1) for transmitting a driving force of an engine (IC) to a load (L) to be driven, in particular in a vehicular drive line, provided with a set of hydraulic pumps (PM, PE) for realising a pressurised supply of hydraulic fluid, at least for the actuation of the transmission (1) within a range of transmission ratios by means of a hydraulic pressure (Ppri, Psec) exerted in pressure chambers (7, 8) of the transmission (1), which set of hydraulic pumps (PM, PE) comprises a mechanically driven pump (PM), driveable by the engine (IC), and an electrically driven pump (PE), driveable by an electric motor independently from the said engine (IC), wherein the mechanically driven pump (PM) is arranged to supply hydraulic fluid from a reservoir (10) for hydraulic fluid to a main hydraulic line (11) of the transmission (1), wherein the electrically driven pump (PE) is arranged to supply hydraulic fluid from the main line (11) to an actuation hydraulic line (20), from which actuation line (20) the pressure chambers (7, 8) are supplied with fluid, wherein a further hydraulic line (30) is provided between the main line (11) and the fluid reservoir (10) in which further hydraulic line there is provided a one-way valve (31), which allows a flow of fluid from the fluid reservoir (10) via the main line (11) towards the said inlet of the electrically driven pump (PE), at least when the mechanically driven pump (PM) is stopped, and that prevents a fluid flow in the opposite direction, and wherein the mechanically driven pump (PM) also supplies hydraulic fluid to at least one auxiliary hydraulic user (U1; U2) of the transmission (1), **characterised in that**, between the said user (U1; U2) and the inlet of the electrically driven pump (PE) there is provided a further valve (32; 33) that prevents a flow of fluid from the said user (U1; U2) towards the inlet of the electrically driven pump (PE), at least when the mechanically driven pump (PM) is stopped.

2. Continuously variable transmission (1) according to claim 1, **characterised in that** the said further valve (32; 33) is a one-way valve (32).

3. Continuously variable transmission (1) according to claim 1, **characterised in that** the said further valve (32; 33) is a pressure control valve (33) that regulates the pressure (Pm) of the hydraulic fluid in the said main line (11), viz. the discharge pressure (Ppm) of the mechanically driven pump (PM).

4. Continuously variable transmission (1) according to claim 1, 2 or 3, **characterised in that**, a hydraulic connecting line (34) is provided between the actuation line (20) and the auxiliary hydraulic user (U1; U2), thus connecting an outlet of the electrically driven pump (PE) to the said user (U1; U2), and **in that** a switch valve (35) is provided in the said connecting line (34) that allows a flow of fluid from the actuation line (20) towards the said user (U1; U2) when the mechanically driven pump (PM) is stopped and that interrupts such flow when the mechanically driven pump (PM) is in operation.

## Patentansprüche

1. Stufenlos variables Getriebe (1) zum Übertragen einer Antriebskraft eines Motors (IC) zu einer anzutreibenden Last (L), insbesondere in einem Fahrzeugantriebsstrang, versehen mit einem Satz hydraulischer Pumpen (PM, PE) zum Herstellen einer druckbeaufschlagten Zufuhr von Hydraulikfluid wenigstens für das Betätigen des Getriebes (1) innerhalb eines Übertragungsverhältnisbereichs mittels eines hydraulischen Drucks (Ppri, Psec), der in Druckkammern (7, 8) des Getriebes (1) ausgeübt wird, wobei der Satz hydraulischer Pumpen (PM, PE) eine mechanisch angetriebene Pumpe (PM) aufweist, die von dem Motor (IC) angetrieben werden kann, und eine elektrisch angetriebene Pumpe (PE), die von einem Elektromotor unabhängig von dem Motor (IC) angetrieben werden kann, wobei die mechanisch angetriebene Pumpe (PM) eingerichtet ist, um Hydraulikfluid von einem Tank (10) für Hydraulikfluid zu einer Haupthydraulikleitung (11) des Getriebes (1) zu liefern, wobei die elektrisch angetriebene Pumpe (PE) eingerichtet ist, um Hydraulikfluid von der Hauptleitung (11) zu einer Betätigungshydraulikleitung (20) zu liefern, von welcher Betätigungsleitung (20) die Druckkammern (7, 8) mit Fluid versorgt werden, wobei eine weitere Hydraulikleitung (30) zwischen der Hauptleitung (11) und dem Fluidtank (10) bereitgestellt ist, wobei in der weiteren Hydraulikleitung ein Einwegventil (31) bereitgestellt ist, das einen Fluidstrom von dem Fluidtank (10) über die Hauptleitung (11) zu dem Einlass der elektrisch angetriebenen Pumpe (PE) erlaubt, wenigstens wenn die mechanisch angetriebene Pumpe (PM) gestoppt ist, und das einen Fluidstrom in die entgegengesetzte Richtung verhindert, und wobei die mechanisch angetriebene Pumpe (PM) auch Hydraulikfluid zu wenigstens einem Hydraulikhilfsverbraucher (U1; U2) des Getriebes (1) liefert, **dadurch gekennzeichnet, dass** zwischen dem Verbraucher (U1; U2) und dem Einlass der elektrisch angetriebenen Pumpe (PE) ein weiteres Ventil (32; 33) bereitgestellt ist, das einen Fluidstrom von dem Verbraucher (U1; U2) zu dem Einlass der elektrisch angetriebenen Pumpe (PE) wenigstens verhindert, wenn die mechanisch angetriebene Pumpe (PM) gestoppt ist.

2. Stufenlos variables Getriebe (1) nach Anspruch 1, **dadurch gekennzeichnet, dass** das weitere Ventil (32; 33) ein Einwegventil (32) ist.

3. Stufenlos variables Getriebe (1) nach Anspruch 1, **dadurch gekennzeichnet, dass** das weitere Ventil (32; 33) ein Drucksteuerventil (33) ist, das den Druck (Pm) des Hydraulikfluids in der Hauptleitung (11), nämlich das Druckablassen (Ppm) der mechanisch angetriebenen Pumpe (PM), regelt.

4. Stufenlos variables Getriebe (1) nach Anspruch 1, 2 oder 3, **dadurch gekennzeichnet, dass** eine hydraulische Verbindungsleitung (34) zwischen der Betätigungsleitung (20) und dem Hydraulikhilfsverbraucher (U1; U2) bereitgestellt ist und daher einen Auslass der elektrisch angetriebenen Pumpe (PE) mit dem Verbraucher (U1; U2) verbindet und dass ein Umschaltventil (35) in der Verbindungsleitung (34) bereitgestellt ist, das einen Fluidstrom von der Betätigungsleitung (20) zu dem Verbraucher (U1; U2) erlaubt, wenn die mechanisch angetriebene Pumpe (PM) gestoppt ist, und das einen derartigen Strom unterbricht, wenn die mechanisch angetriebene Pumpe (PM) in Betrieb ist.

## Revendications

1. Transmission à variation continue (1) pour transmettre une force d'entraînement d'un moteur (IC) à une charge (L) à entraîner, en particulier dans une chaîne d'entraînement d'un véhicule, pourvue d'un ensemble de pompes hydrauliques (PM, PE) pour réaliser une alimentation sous pression de fluide hydraulique, au moins pour l'actionnement de la transmission (1) dans une plage de rapports de transmission au moyen d'une pression hydraulique (Ppri, Psec) exercée dans des chambres de pression (7, 8) de la transmission (1), lequel ensemble de pompes hydrauliques (PM, PE) comprend une pompe entraînée mécaniquement (PM), pouvant être entraînée par le moteur (IC), et une pompe entraînée électriquement (PE), pouvant être entraînée par un moteur électrique indépendamment dudit moteur (IC), la pompe entraînée mécaniquement (PM) étant prévue pour fournir du fluide hydraulique provenant d'un réservoir (10) de fluide hydraulique à une ligne hydraulique principale (11) de la transmission (1), la pompe entraînée électriquement (PE) étant prévue pour alimenter en fluide hydraulique provenant de la ligne principale (11) une ligne hydraulique d'actionnement (20), depuis laquelle ligne d'actionnement (20) les chambres de pression (7, 8) sont alimentées en fluide, une ligne hydraulique supplémentaire (30) étant prévue entre la ligne principale (11) et le réservoir de fluide (10), dans laquelle ligne hydraulique supplémentaire est prévue une soupape unidirectionnelle (31), qui permet l'écoulement de fluide depuis le réservoir de fluide (10) par le biais de la ligne principale (11) vers ladite entrée de la pompe entraînée électriquement (PE), au moins lorsque la pompe entraînée mécaniquement (PM) est arrêtée, et qui empêche un écoulement de fluide dans la direction opposée, et la pompe entraînée mécaniquement (PM) alimentant aussi en fluide hydraulique au moins un utilisateur hydraulique auxiliaire (U1 ; U2) de la transmission (1), **caractérisée en ce qu'**entre ledit utilisateur (U1 ; U2) et l'entrée de la pompe entraînée électriquement (PE) est prévue une soupape supplémentaire (32 ; 33) qui empêche un écoulement de fluide depuis ledit utilisateur (U1 ; U2) vers l'entrée de la pompe entraînée électriquement (PE), au moins lorsque la pompe entraînée électriquement (PM) est arrêtée.

2. Transmission à variation continue (1) selon la revendication 1, **caractérisée en ce que** ladite soupape supplémentaire (32 ; 33) est une soupape unidirectionnelle (32).

3. Transmission à variation continue (1) selon la revendication 1, **caractérisée en ce que** ladite soupape supplémentaire (32 ; 33) est une soupape à commande de pression (33) qui régule la pression (Pm) de fluide hydraulique dans ladite conduite principale (11), comme la pression de décharge (Ppm) de la pompe entraînée mécaniquement (PM).

4. Transmission à variation continue (1) selon la revendication 1, 2 ou 3, **caractérisée en ce qu'**une ligne de connexion hydraulique (34) est prévue entre la ligne d'actionnement (20) et l'utilisateur hydraulique auxiliaire (U1 ; U2), connectant ainsi une sortie de la pompe entraînée électriquement (PE) audit utilisateur (U1 ; U2), et **en ce qu'**une soupape de commutation (35) est prévue dans ladite ligne de connexion (34) et permet un écoulement de fluide depuis la ligne d'actionnement (20) vers ledit utilisateur (U1 ; U2) lorsque la pompe entraînée mécaniquement (PM) est arrêtée et qui interrompt ledit flux lorsque la pompe entraînée mécaniquement (PM) fonctionne.
